# EUROPEAN PATENT SPECIFICATION

(11) **EP 1 871 850 B1**
(45) Date of publication and mention of the grant of the patent: **27.06.2018**
(21) Application number: 06732750.2
(22) Date of filing: 30.03.2006
(51) Int. Cl.: C09D 193/00, C09D 199/00, C09D 5/00, C08L 93/00, C08L 99/00, A01N 25/00, A01N 65/00, C09D 7/40

(54) **FUNCTIONAL UV PAINT, CONSTRUCTION MATERIAL USING THE SAME, AND METHOD OF PREPARING THE PAINT**
FUNKTIONELLER UV-LACK, DAVON GEBRAUCH MACHENDES BAUMATERIAL SOWIE VERFAHREN ZUR HERSTELLUNG DES LACKS
PEINTURE UV FONCTIONNELLE, MATERIAU DE CONSTRUCTION UTILISANT CETTE PEINTURE ET PROCEDE DE PREPARATION DE LADITE PEINTURE

(30) Priority: 22.04.2005 KR 20050033643; 30.11.2005 KR 20050115907
(43) Date of publication of application: 02.01.2008
(73) Proprietor: LG Chem, Ltd., Youngdungpo-gu, Seoul 150-721 (KR)
(72) Inventor: YUE, Sunghoon, Seongnam-city, Kyungki-do 463-751 (KR); LEE, Minjung, A-509 Lg Chem. Dormitory, Cheonju-city, Chungcheongbuk-do 361-817 (KR); KANG, Seoggoo, Cheongju-city, Chungcheongbuk-do 360-181 (KR); MIN, Il-Hong, Cheongju-city, Chungcheongbuk-do 361-819 (KR); JOUNG, Jae-Youl, Cheongju-city, Chungcheongbuk-do 361-270 (KR)
(74) Representative: Hoffmann Eitle
(86) International application number: PCT/KR2006/001177
(87) International publication number: WO 2006/112623

(56) References cited:
- EP-A1- 1 354 919
- WO-A1-2005/026269
- WO-A2-2004/092283
- CN-A- 1 468 916
- JP-A- 2001 226 827
- JP-A- 2001 286 541
- JP-A- 2002 060 693
- KR-A- 2004 064 188
- KR-A- 20020 046 395
- KR-A- 20030 072 152

## Description

### Technical Field

The present invention relates to a functional UV paint, and more particularly, to a UV paint which includes a dry plant powder or the like instead of either an additive or a loading pigment among constituents of a UV curable paint to reduce a variety of volatile organic compounds (VOCs) and remove formaldehyde (HCHO), thereby providing an environmental friendly paint composition, and to minimize the amount of dissipation of hazardous compounds resulting from construction materialsto which the paint is applied, thereby improving indoor air quality of human residences, a construction material using the same, and a method of preparing the paint.

### Background Art

Among various contaminants affecting indoor air quality, VOCs and HCHO have an effect on the nervous system as well respiratory organs and circulatory organs of humans, therebyreducing the sensibility of the peripheral nervous system and have cancer-causing ability and toxicity as shown in Table 1 (VOCs generated indoors and effects thereof) and Table 2 (HCHO hazards). Thus, these materials are regulated in Korea, The United States, Japan, Europe, etc.

**Table 1**

| Contaminant | Effect on human body |
|---|---|
| VOCs (benzene, toluene, xylene, stylene, benzaldehyde) | Dyspnea, somnolence, comatose, headache, fatigue, unconsciousness and so on |

**Table 2**

| Concentration (ppm) | Effect on human body |
|---|---|
| 0.1-5 | Irritation to eyes, causing tears, irritation to upper respiratory tract |
| 1 or less | Irritation to eyes, nose, and neck |
| 0.25 - 5 | Serious asthmatic attack in persons suffering from bronchial asthma |
| 10 - 20 | Cough, compression of lungs, heavy feeling in the head, fast heart rate, |
| 50 - 100 | Accumulation of body fluid in lungs, lung inflammation, death; when drinking, serious distress of oral cavity, neck and abdomen, emesis, diarrhea, dizziness, convulsion, unconsciousness |

Hitherto, a paint prepared by mixing TiO₂ (photocatalyst), tourmaline (inorganic material), anion, ZnO-MnO₂ (new material), etc. with a synthetic resin has been used to improve indoor air quality or air handling unitshave been installed in residential or commercial buildings to improve indoor air quality. However, these methods do not have high effectiveness due to high costs and non-proven effects.

In addition, efficiency of decomposing or adsorbing VOCs and HCHO diminishes with time.

Meanwhile, polyphenol compounds, flavonoid compounds and steroid compounds obtained naturally are known to have many functions including deodorization, detoxification on heavy metals and nicotine, antitumor effects, suppression of environmental hormones, antioxidation, decomposing nitrous salt, sterilization of catechin components and so on. These compounds are currently used to prepare beverages, cosmetics, and various foods having the above-described functions.

Paints including natural materials such as wood powder, chaff powder and rice-straw powder are disclosed in Korean Patent Laid-Open Publication Nos. 2002-46395, 2003-26710, and 2003-72152. However, the gist of these patents is providing texture, far-infrared ray radiation function, etc. to the paints and there is no consideration of VOCs and HCHO.

Furthermore, the paints are aqueous paints. Thus, a UV curable paint of the present invention is fundamentally different from conventional paints in view of technical application and material constitution. For example, while UV curable paints do not contain adhesives and essentially contain a photoinitiator to be cured by UV light, conventional paints essentially contain an adhesive and do not contain a UV inhibitor.

KR 2002 0046395 discloses a natural material and an aqueous paint comprising the natural material and a mineral material, to allow the aqueous paint to be sprayed and to obtain a natural textured appearance.

WO 2005/026269 discloses paints and coatings comprising a cell-based particulate material. Specifically disclosed is cell-based particulate material prepared from microorganisms for use as a coating component. Also disclosed are methods of preparing a coating that comprises a cell-based particulate material.

CN 1 468 916 relates to the use of plant polyphenol compounds.

In this regard, a UV paint is required to minimize VOCs and HCHO of the paint itself, not to affect workability in the painting application and physical properties of paint film, and to remove VOCs of products using the UV paint.

Thus, there is demand for a new functional UV paint capable of meeting the above-described requirements.

### Disclosure of Invention

### Technical Solution

The present invention provides an environmental friendly, functional UV paint which can minimize the amount of dissipation of VOCs and HCHO of the paint itself and products using the paint, without affecting workability and physical properties of paint film.

The present invention thus provides a UV-curable paint as defined in the claims and it also provides a construction material using the functional UV paint.

The present disclosure also provides a method of preparing the functional UV paint.

According to an aspect of the present invention, there is provided a functional UV paint including a polyphenol compound, a flavonoid compound, a steroid compound, or a mixture thereof, in which molecular weights of the compounds range from 250 to 1000.

In the UV paint, the flavonoid compound or the polyphenol compound may be at least one compound selected from the group consisting of anthoxanthins, anthocyanins, catechins, tannin, and caffeine.

In the UV paint, the steroid compound may be cholesterol, saponin, or β-carotene.

In the UV paint, the flavonoid compound, the polyphenol compound, or the steroid compound may be included in an amount of 0.01 to 2 wt% based on the total weight of the paint.

In the UV paint, the flavonoid compound or the steroid compound may be obtained from anatural plant.

In the UV paint, the natural plant is green tea or powdered green tea.

In the UV paint, the flavonoid compound, the polyphenol compound, or steroid compound may be in the form of dry plant powder, plant flakes, plant extracts or a dispersion of the powder.

In the UV paint, the dry plant powder or plant flakes has a size of 0.02 to 125 µm.

In the UV paint, the dry plant powder or plant flakes is added in an amount of 1 to 5 wt% based on the total weight of the paint.

In the UV paint, the dry plant powder or plant flakes may be added in an amount of 1 to 2.5 wt% based on the total weight of the paint.

In the UV paint, a solvent used in the extract or the dispersion may be water, alcohol, oil, or resin.

The UV paint may be used to paint a surface of a material such as a door, a window, a chair, a desk, a floor, a wall paper, a floor covering, a ceiling material, interior and exterior of automobiles, a wardrobe, a television, a refrigerator, a kimchi refrigerator, home appliance, a wall closet material or a flooring material.

According to another aspect of the present invention, there is provided a construction material painted with the UV paint

According to another aspect of the present disclosure, there is provided a method of preparing the UV paint, the method including: screening particulates with a particle size of 0.02 to 125 µm after pulverizing dry plant; sufficiently mixing paint raw materials including an oligomer; and adding and dispersing into the mixed paint raw materials the particulates in an amount of 1 to 5 wt% based on the total weight of the paint.

In the method, a liquid extract of plant or a dispersion of the particulates may be added to the paint raw materials instead of the particulates.

The functional UV paint includes a natural compound having adsorptive power, unlike a conventional UV paint, to reduce VOCs of products using the paint as well as VOCs and HCHO of the paint itself.

### Advantageous Effects

The functional UV paint according to an embodiment of the present invention can reduce VOCs of a product using the same as well as VOCs and HCHO of the paint itself.

### Description of Drawings

The above and other features and advantages of the present invention will become more apparent by describing in detail exemplary embodiments thereof with reference to the attached drawings in which:
FIG. 1 is a flowchart illustrating a process of preparing a UV paint which contains dry plant powder or plant flake powder, according to an embodiment of the present invention;
FIGS. 2A through 2C are photographic images of construction materials coated with the UV paint;
FIGS. 3A through 3C are photographic images showing water and discoloration resistance of construction materials coated with the UV paint; and
FIG. 3D illustrates brightness of construction materials coated with the UV paint.

### Mode for Invention

Hereinafter, the present invention will be described in greater detail.

The present invention provides a functional UV-curable paint consisting of 1 to 5 wt% particulates based on the total weight of the paint, oligomers, solvent and/or monomer, a photoinitiator, an additive, an antifoaming agent, and an extender pigment, wherein said particulates are dry plant of green tea powder, green tea flakes, or a mixture thereof, having a particle size range from 0.02 to 125 pm; and wherein said plant contains contain a flavonoid compound, a polyphenol compound, and/or a steroid compound with molecular weights of the compounds range from 250 to 1000.

The flavonoid compound which is an amber pigment widely distributed in plants is derived from flavus that means amber color in Greek and refers to a plant pigment having flavone as a basic structure. A relatively low amount of the flavonoid compound is contained in animals and the flavanoid compound is abundant in leaves, flowers, roots, fruits, and stems of plants.

The polyphenol compound is a chemical distributed in specific plants that taste astringent and bitter and has a structure of an aromatic compound such as benzene having at least one hydroxyl group (-OH). The polyphenol compound is widely known to have pharmacological functions such as antibiotic and anti-inflammatory effects, skin smoothing, lowering of cholesterol, and anti-allergic effects.

The steroid compound having a steroid nuclei is generally contained in hormones. However, the steroid compound can have various structures according to substituents thereof and also exist in plants.

Among these compounds, compounds having a molecular weight of 250 to 1000 can be used in the present invention. When the molecular weight is less than 250, volatibility is undesirably high. When the molecular weight is greater than 1000, an oligomer is formed, which increases viscosity of added materials or relatively reduces absorptive power to organic materials.

The flavonoid compound or the polyphenol compound used in the present invention is not particularly restricted, but is preferably antoxanthins, anthocyanins, catechins, or Tannin, in particular catechins or Tannin.

Catechins have a structure represented by Formula 1 ((-)-catechin) and a structure represented by Formula 2 ((+)-catechin) and many derivatives based on such structures are known.

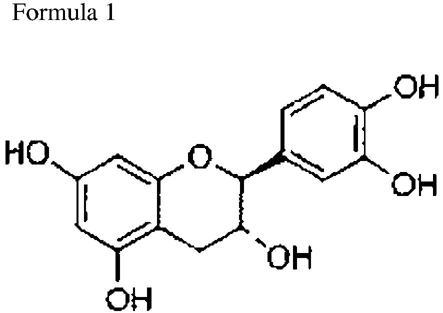

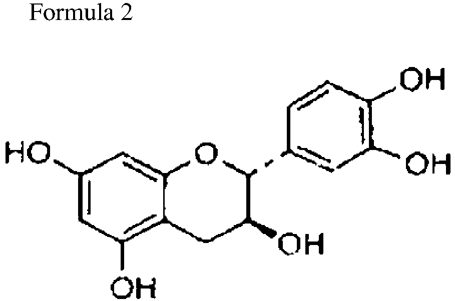

Also, catechins are functional compounds known to have various pharmacological effects.

The steroid compound useful in the present invention is not particularly restricted, but is preferably cholesterol, saponin and so on, in particular saponin.

Saponin can have structures having a saccharide attached to steroid nuclei (aglycone), for example, structures represented by Formulae 3 and 4. Examples of the saccharide include D-glucose, D-galactose, L-arabinose, and D-rhamnose.

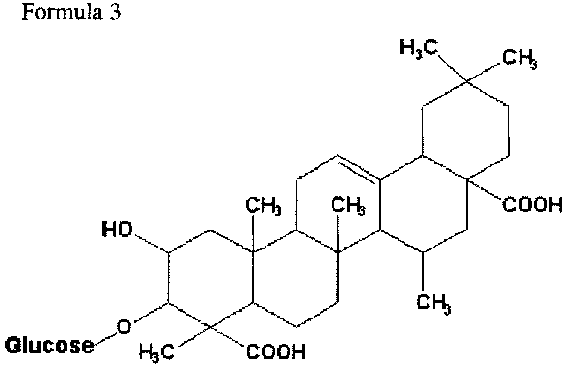

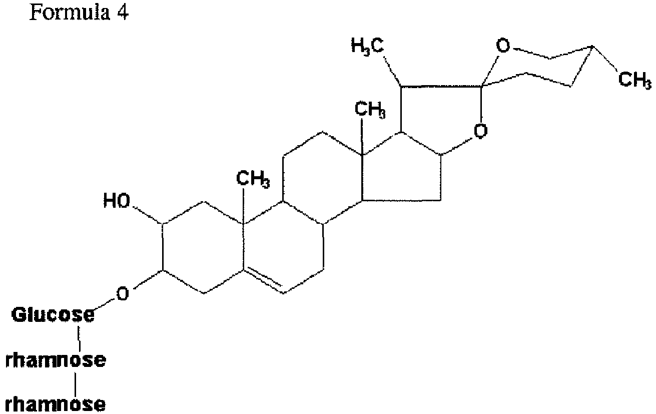

The flavonoid compound, the polyphenol compound, or the steroid compound may be included in an amount of 0.01 to 2 wt% based on the total weight of the paint. When the amount of the compound is less than 0.01 wt%, it is difficult to adsorb VOCs etc. When the amount of the compound is greater than 2 wt%, the obtained effects are insignificant in spite of an increase in the added amount and products using the paint are discolorized due to inherent color of the compound.

The flavonoid compound, the polyphenol compound, or the steroid compound used in the present invention is obtained from a natural plant, the plant being green tea or powdered green tea.

The flavonoid compound, the polyphenol compound, or the steroid compound are not particularly restricted in form thereof, but may be in the form of dry plant powder, plant flakes, or plant extracts or a dispersion of the powder.

The UV-curable paint will now be described in greater detail.

Main ingredients of green tea are catechin (10-18%), other flavonoids (0.6-0.7%), caffeine (2-4%), polysaccharide (0.6%), Vitamin C (150-250 mg%), Vitamin E (25-70 mg%), β-carotene (13-29 mg%), GABA (γ-aminobutyric acid) (100-200 mg%), saponin, fluorine (90-350 ppm), zinc (35-75 ppm), and selenium (1.0-1.8 ppm). Catechin that is most abundant in green tea has many hydroxyl groups (-OH) in its chemical structure. Thus, catechin can easily bind with VOCs to be stabilized. In this regard, catechin has an antioxidation effect of removing active oxygen in body and facilitates oxidation of fat together with vitamins. In addition, cathechin chemically adsorbs HCHO at ortho- and para-portions of a polyphenol group. Most reactions in the polyphenol group are exothermic reactions, and thus once chemical bonding occurs, the bonding has a strong binding force. Thus, materials that have undergone chemical reactions are not re-discharged. Saponin binds with stearin, alcohol, phenol and so on to form a poorly soluble molecular compound. Green tea powder catchesVOCs and HCHO in the same principle that the ingredients of the green teareact with various organic compounds in the human body.

An extract of green tea or green tea flake is obtained in a liquid phase by extracting green tea or green tea flake using water or an organic solvent such as alcohol. A total volatile organic compound (TVOC) refers to allvolatile organic compounds detected-between hexane and hexadecane during a GC/MS analysis under ISO 6000-3 and 6000-6.

Meanwhile, the size of the dry plant powder or plant flakes is 0.02 to 125 µm. When the size of the dry plant powder or plant flakesis less than 0.02 µm, it is difficult to mix and compound with paint due to dust. When the size of the dry plant powder or plant flakes is greater than 125 µm, it is difficult to uniformly disperse it when mixing with paint. The amount of the dry plant powder or plant flakes is 1 to 5 wt%, for example, and more preferably 1 to 2.5 wt%, based on the total weight of the paint. When the amount of the dry plant powder or plant flakes is less than 1 wt%, it is difficult to obtain desired effects due to a low amount of effective ingredients in the powder. When the amount of the dry plant powder or plant flakes is greater than 5 wt%, the obtained effects are insignificant in spite of an increase in the added amount and the color of the paint may deteriorate due to inherent color of the powder.

The solvent used in the preparation of the plant extract and the dispersion of the powder may be any solvent used in the extraction of organic materials, but may be water such as tap water, distilled water, and ultrapure water; alcohols such as methanol, ethanol, propanol, butanol, isopropylalcohol, and hexanol; oils such as drying oils, for example, linseed oil, wood oil, and perilla oil; resins such as acryl, epoxy, urethane, ester, silica, melamine, phenol, and urea resins, etc.

The UV paint of the present embodiment is not particularly restricted in its application, but may be used to paint a surface of doors, windows, chairs, desks, floors, wall paper, a floor covering, ceiling material, wall closet material, and flooring material, interior and exterior of automobiles, televisions, refrigerators, kimchi refrigerators, and home appliance.

The present invention also provides a construction material painted with the UV paint. The construction material is not particularly restricted, but may be a ceiling material, a wall closet material, or a flooring material, for example, a heated floor, a floor coveringor a tile.

The UV curable paint containing a green tea component can be used as a paint in order to improve air quality of rooms or underground space. Furthermore, the UV curable paint can be used in the painting of ceilings, floors, and walls, to minimize VOCs and HCHO.

A method of preparing the UV paint according to an embodiment of the present invention will now be described in detail.

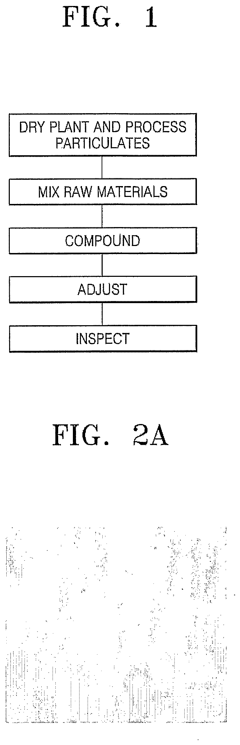

FIG. 1 is a flowchart illustrating a process of preparing a UV paint which contains dryplantpowder or plant flake powder, according to an embodiment of the present invention. The method of preparing the UV paint includes: screening particulates with a particle size of 0.02 to 125 µm after pulverizing a dry plant; sufficiently mixing paint raw materials including an oligomer; and adding and dispersing into the mixed paint raw materials the particulates in an amount of 1 to 5 wt% based on the total weight of the paint. FIG. 1 is a diagram of a process of preparing a UV paint, which contains dry plant powder or plant flake powder. The preparation process includes processing of particulates, mixing of paint raw materials, compounding, adjusting, and inspecting.

In the processing of particulates, green tea leaves or stems are pulverized at highro-tatoryspeed using a pulverizer. After the pulverization is completed, air and pulverized particulates discharged from the pulverizer are classified by particle size using an air blower and only particulates with a particle size of 0.02 to 125 µm are selected and used.

In the method, a liquid extract of plant or a dispersion of the particulates may be added to the paint raw materials instead of the particulates. The powder can be added to paint raw materials, but can be extracted with an organic solvent to form a liquid extract or can be dissolved or dispersed in a solvent.

The mixing of paint raw materials is to sufficiently mix an oligomer and a monomer which are main raw materials of the UV curable paint before compounding the green tea powder.

Generally used UV paints are divided into solvent-free UV paints and solvent-based UV paints, and main constituents thereof are as described in Table 3.

**Table 3**

| | Solvent-based UV paint | Solvent-free UV paint |
|---|---|---|
| Main ingredient | 50 to 60 wt% of oligomer, 30 to 40 wt% of solvent (thinner, alcohol, water), photoinitiator | 60 to 80 wt% of oligomer, 20 to 30 wt% of monomer, photoinitiator |
| Sub- ingredient | Antifoaming agent, extender pigment, additives | Monomer, antifoaming agent, extender pigment, additives |
| **Oligomer** | Urethane acrylate, epoxy acrylate, polyester acrylate, silicone acrylate | Urethane acrylate, epoxy acrylate, polyester acrylate, silicone acrylate |

The additives in the UV paints are materials added in the development of functional products and examples thereof include a leveling agent, an antifoaming agent, a polymerization inhibitor, a dispersant, and an anti-precipitation agent. For example, when a fluorine resin is added, contamination resistance increases, when a special silicone component is added, hardness increases, and when elvan is added, far infrared rays are emitted.

When the dry plant powder or plant flake powder is used as an additive, a functional paint that has reduced VOCs and catches HCHO can be provided. Also, when the dry plant powder or plant flake powder is used instead of talc or CaCO₃, which is an extender pigment, the content of the dry plant powder in the UV paint increases, which can more effectively reduce VOCs and remove HCHO.

In the compounding process, an oligomer, a monomer and a photoinitiator, which are main ingredients, are mixed and compounded with an antifoaming agent, an extender pigment and an additive, which are subsidiary ingredients. In the present invention, a well-prepared dry plant powder or plant flake powder is added instead of the extender pigment or the additive and thoroughly dispersed.

The amount of the dry plant powder or plant flake powder is such that the paint has a proper viscosity to maintain the workability of a conventional UV paint and is not discolorizcd. Thus, the amount of the dry plant powder or plant flake powder is 5 wt% or less based on the total weight of the paint. Although the dry plant powder or plant flake powder can be added up to 10 wt%, the paint losesits basic color and is colorizedaccording to the color of the plant.

The particle size of the dry plant powder or plant flake powder should be 125 µm or less, for example, 100µm or less not to affect dispersion of the UV paint, formation and shape of paint film. When the particle size is greater than 125µm, the dry plant powder is agglomerated and precipitated. When a paint containing such a powder is applied to a product, uniform painting is difficult and workability is poor.

To improve the dispersibility of the dry plant powder or plant flake powder in the UV paint, the dry plant powder or plant flake powder may be mixed with an oligomer after being dissolved or dispersed in drying oils such as linseed oil, wood oil, and perilla oil; water; alcohols such as methanol, ethanol, propanol, butanol, isopropylalcohol, and hexanol; and synthetic resins such as acryl, epoxy, urethane, and ester resins.

Viscosity or gloss of the UV paintneeds to be adjusted according to the use of the UV paint.

In the inspecting process, it is judged whether the UV paint meets standard requirements, and standardization and product applicability tests are performed. Through this process, the UV paint containing a green tea component is finally obtained.

### Examples

### Preparation of UV curable paint

### Example 1

Green tea leaveswere pulverized at high rotary speedusing a pulverizer. Only particulates with a particle size of 0.02 to 125 µm were screened among particulates classified by an air blower. After paint raw materials were sufficiently mixed, the green tea powder was added to the paint raw materials having contents as in Table 4 and dispersed to obtain a UV paint. In Table 4, urethane acrylate and epoxy acrylate were used as oligomers (60 wt%), a styrene monomer or an acrylate monomer including diphenaethrylo hexaacrylate was used as a monomer (25 wt%), and a photoinitiator having two or more functional moiety (4 wt%), an additive (1 wt%) and an extender pigment (8 wt%) were used. The paint raw material was AULEX 893FK-HV and No050404 green tea (2 wt%) was added.

**Table 4**

| Component | Oligomer | Monomer | Photoinitia tor | Additive | Extender pigment | Green tea powder |
|---|---|---|---|---|---|---|
| Content (wt%) | 60 | 25 | 4 | 1 | 8 | 2 |

### Example 2

A UV paint was prepared in the same manner as in Example 1, except that 7 wt% of the extender pigment and 2.5 wt% of green tea powder were used.

### Example 3

A UV paint was prepared in the same manner as in Example 1, except that 7 wt% of the extender pigment and 3 wt% of green tea powder were used.

### Example 4

A UV paint was prepared in the same manner as in Example 1, except that 5 wt% of the extender pigment and 5 wt% of green tea powder were used.

### Comparative Example 1

A UV paint was prepared in the same manner as in Example 1, except that 10 wt% of the extender pigment was used and no green tea powder was added.

### Comparative Example 2

A UV paint was prepared in the same manner as in Example 1, except that 0.1 wt% of green tea powder and 9.9 wt% of the extender pigment were used.

### Comparative Example 3

A UV paint was prepared in the same manner as in Example 1, except that 9 wt% of green tea powder and 1 wt% of the extender pigment were used.

### Comparative Example 4

A UV paint was prepared in the same manner as in Example 1, except that 5 wt% of the extender pigment and 5 wt% of Angelica Keiskei Koidz were used instead of green tea powder.

### Comparative Example 5

A UV paint was prepared in the same manner as in Example 1, except that 5 wt% of the extender pigment and 5 wt% of cale were used instead of green tea powder.

### Experimental Example

### Measurement of TVOC concentration and dissipation rate of the UV paints

1.2 g of each of the UV paints prepared in Examples 1-4 and Comparative Examples 1-5 was applied to a 16.5 cm × 16.5 cm glass in an area of 6.32 cm × 6.32 cm. The glass was irradiated with 212 mj/cm² UV lamp at a line speed of 10 m/min. The amount of dissipation and the dissipation rate of TVOC of the UV paints were measured using Small Chamber and FLEC (field and laboratory emission cell). The obtained results are set forth in Table 5.

**Table 5**

| | Concentration (µm/m³) | Dissipation rate (mg/m²hr) |
|---|---|---|
| Example 1 | 171.29 | 0.057 |
| Example 2 | 160.04 | 0.053 |
| Example 3 | 159.46 | 0.053 |
| Example 4 | 120.90 | 0.040 |
| Comparative Example 1 | 326.21 | 0.11 |
| Comparative Example 2 | 310.03 | 0.10 |
| Comparative Example 3 | 229.25 | 0.07 |
| Comparative Example 4 | 406.00 | 0.14 |
| Comparative Example 5 | 236.12 | 0.08 |

### Measurement of TVOC dissipation rate of construction material using the UV paint

The UV paints prepared in Examples 1-4 and Comparative Examples 1-5 were painted on a flooring material (arboretum heated floor, produced by LG Chem. Ltd.). The dissipation rate of TVOC was measured using Small Chamber. The obtained results are set forth in Table 6.

**Table 6**

| | Dissipation rate (mg/m ²hr) |
|---|---|
| Example 1 | 0.079 |
| Example 2 | 0.077 |
| Example 3 | 0.073 |
| Example 4 | 0.072 |
| Comparative Example 1 | 0.106 |
| Comparative Example 2 | 0.108 |
| Comparative Example 3 | 0.102 |
| Comparative Example 4 | 0.128 |
| Comparative Example 5 | 0.103 |

As shown in Table 5, the concentration and the TVOC dissipation rate of UV paints prepared in Examples 1-4 is about 1/3 of that of Comparative Example 1. Comparative Examples 4 and 5, in which Angelica Keiskei Koidz and cale are used instead of green tea powder, exhibit high TVOC concentration and dissipation rate. Also, Comparative Examples 2 and 3 have higher TVOC concentration and dissipation rate than Examples 1-4. These results indicate that the concentration range of the green tea powder of Examples 1-4 is the most suitable for reducing the TVOC concentration and the dissipation rate. Thus, it is confirmed that compounds obtained from natural plants used in the present invention can effectively reduce TVOC. As shown in Table 6, the UV paint of the present invention also reduces the TVOC dissipation rate even when applied to a construction material. Thus, the construction material using the UV paint of the present invention can act as a barrier against hazardous compounds unlike conventional construction materials.

### Appearance evaluation for construction material using the UV paint

The appearance of the flooring material (arboretum heated floor) used in the measurement of the TVOC dissipation rate was evaluated.

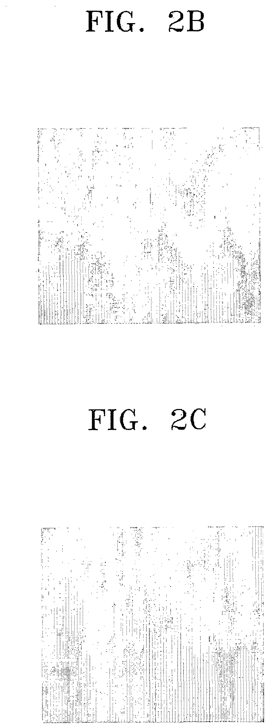

FIGS. 2A through 2C are photographic images of construction materials coated with the UV paint of the present invention. Referring to FIGS. 2A through 2C, Example 1 (FIG. 2B) and Comparative Example 1 (FIG. 2A) exhibit a similar surface state, while Comparative Example 3 (FIG. 2C) has defects in appearance due to lightening of the color caused by the green tea.

### Evaluation of water and discoloration resistance for construction material using the UV paint

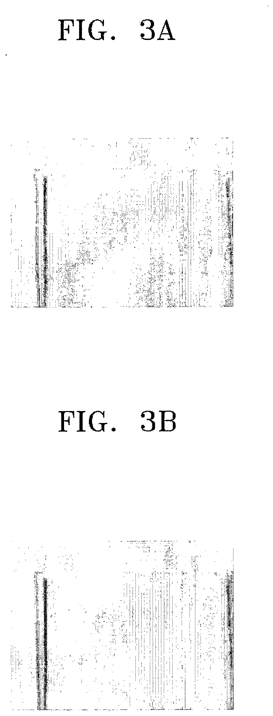

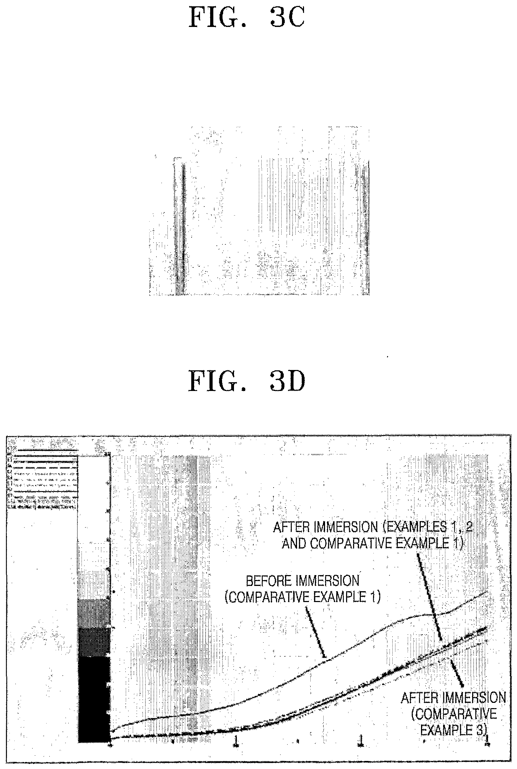

FIGS. 3A through 3C are photographic images showing water and discoloration resistance of construction materials coated with the UV paint. The water and discoloration resistance of the flooring material (arboretum heated floor) used in the measurement of the TVOC dissipation rate was evaluated. After cutting the sample to a size of 100 mm(length) × 50 mm (width), the sample was immersed at a depth of 3 cm in water at 25 °C . By continuously observing for 1, 3, 5, and 7 days, discoloration of the new product was judged in comparison with a commercially available heated floor. A brightness difference at a visible light range was compared using Labscan XE equipment of Hunter Lab. FIG. 3D illustrates brightness of construction materials coated with the UV paint. Referring to FIG. 3D, Examples 1 and 2, and Comparative Example 1 have a similar brightness, while Comparative Example 3 containing 9 wt% of the green tea exhibits a brightness difference.

Referring to FIGS. 3A through 3C, Example 1 (FIG. 3B) has similar water and discoloration resistance to Comparative Example 1 (FIG. 3A), while Comparative Example 3 (FIG. 3C) changes into a deep green color.

The functional UV paint according to an embodiment of the present invention can reduce VOCs of a product using the same as well as VOCs and HCHO of the paint itself.

While the present invention has been particularly shown and described with reference to exemplary embodiments thereof, it will be understood by those of ordinary skill in the art that various changes in form and details may be made therein without departing from the scope of the present invention as defined by the following claims.

### Industrial Applicability

The functional UV paint according to the present invention can reduce VOCs of a product using the same as well as VOCs and HCHO of the paint itself.

## Claims

1. A UV-curable paint consisting of 1 to 5 wt% particulates based on the total weight of the paint, oligomers, solvent and/or monomer, a photoinitiator, an additive, an antifoaming agent, and an extender pigment,
wherein said particulates are dry plant of green tea powder, green tea flakes, or a mixture thereof, having a particle size range from 0.02 to 125 *µ*m; and
wherein said plant contains a flavonoid compound, a polyphenol compound, and/or a steroid compound with molecular weights of the compounds range from 250 to 1000.

2. The UV-curable paint of claim 1, wherein the amount of the particulates is such that said flavonoid compounds, polyphenol compounds, and/or steroid compounds constitute 0.01 to 2 wt% of the total weight of the paint.

3. The UV-curable paint of claim 1, wherein the dry green tea powder or green tea flakes are added in an amount of 1 to 2.5 wt% based on the total weight of the paint.

4. The UV-curable paint of any one of claims 1, 2, or 3, which is used to paint a surface of at least one selected from the group consisting of a door, a window, a chair, a desk, a floor, wallpaper, a floor covering, a ceiling material, and a flooring material.

5. A construction material painted with the UV-curable paint of any one of claims 1, 2, or 3.

## Patentansprüche

1. UV-härtbarer Lack, der aus 1 bis 5 Gew.-% Teilchen bezogen auf das Gesamtgewicht des Lacks, Oligomeren, Lösungsmittel und/oder Monomer, einem Photostarter, einem Zusatzstoff, einem Antischaummittel und einem Verschnittpigment besteht,
wobei die Teilchen ein trockenes grünes Teepulver einer Pflanze, grüne Teeflocken oder eine Mischung davon sind und einen Teilchengrößenbereich von 0,02 bis 125 µm aufweisen; und
wobei die Pflanze eine Flavonoidverbindung, eine Polyphenolverbindung und/oder eine Steroidverbindung mit Molekulargewichten der Verbindungen von 250 bis 1000 enthält.

2. UV-härtbarer Lack nach Anspruch 1, wobei die Menge der Teilchen so ist, dass die Flavonoidverbindungen, Polyphenolverbindungen und/oder Steroidverbindungen 0,01 bis 2 Gew.-% des Gesamtgewichts des Lacks ausmachen.

3. UV-härtbarer Lack nach Anspruch 1, wobei das trockene grüne Teepulver oder die grünen Teeflocken in einer Menge von 1 bis 2,5 Gew.-% bezogen auf das Gesamtgewicht des Lacks hinzugefügt werden.

4. UV-härtbarer Lack nach mindestens einem der Ansprüche 1, 2 oder 3, der verwendet wird, um eine Oberfläche aus mindestens einem Vertreter, ausgewählt aus der Gruppe bestehend aus einer Tür, einem Fenster, einem Stuhl, einem Tisch, einem Boden, einer Tapete, einem Bodenbelag, einem Deckenmaterial und einem Bodenmaterial, zu streichen.

5. Baumaterial, das mit dem UV-härtbaren Lack nach mindestens einem der Ansprüche 1, 2 oder 3 bestrichen ist.

## Revendications

1. Peinture durcissable aux UV constituée de 1 à 5% en poids de particules sur la base du poids total de la peinture, d'oligomères, d'un solvant et/ou d'un monomère, d'un photoinitiateur, d'un additif, d'un agent antimousse, et d'un pigment de charge,
dans laquelle lesdites particules sont une poudre sèche de plante de thé vert, des flocons de thé vert, ou un mélange de ceux-ci, ayant une taille particulaire allant de 0,02 à 125 µm ; et
dans laquelle ladite plante contient un composé de flavonoïde, un composé de polyphénol, et/ou un composé de stéroïde avec les poids moléculaires des composés allant de 250 à 1000.

2. Peinture durcissable aux UV selon la revendication 1, dans laquelle la quantité des particules est telle que lesdits composés de flavonoïde, composés de polyphénol, et/ou composés de stéroïde constituent 0,01 à 2 % en poids du poids total de la peinture.

3. Peinture durcissable aux UV selon la revendication 1, dans laquelle la poudre sèche de thé vert ou les flocons de thé vert sont ajoutés en une quantité de 1 à 2,5 % en poids sur la base du poids total de la peinture.

4. Peinture durcissable aux UV selon l'une quelconque des revendications 1, 2, ou 3, qui est utilisée pour peindre une surface d'au moins l'un sélectionné dans le groupe constitué d'une porte, d'une fenêtre, d'une chaise, d'un bureau, d'un plancher, d'un papier pain, d'un revêtement de sol, d'un matériau de plafond, et d'un matériau de sol.

5. Matériau de construction peint avec la peinture durcissable aux UV selon l'une quelconque des revendications 1, 2, ou 3.
